# FASCICULE DE BREVET EUROPEEN

(11) **EP 3 753 088 B1**
(45) Date de publication et mention de la délivrance du brevet: **17.04.2024**
(21) Numéro de dépôt: 19700845.1
(22) Date de dépôt: 23.01.2019
(51) Int. Cl.: H02K 1/20, F04D 25/06, H02K 5/20, H02K 7/14, H02K 5/12, H02K 3/52, H02K 3/50, H02K 3/24, F04D 29/42, H02K 9/04

(54) **MACHINE ELECTRIQUE A GRILLE STATORIQUE COMPRENANT DES APPENDICES AERODYNAMIQUES**
ELEKTRISCHE MASCHINE MIT EINEM STATORGITTER MIT AERODYNAMISCHEM ZUBEHÖR
ELECTRIC MACHINE HAVING A STATOR GRATING COMPRISING AERODYNAMIC APPENDAGES

(30) Priorité: 16.02.2018 FR 1851329
(43) Date de publication de la demande: 23.12.2020
(73) Titulaire: IFP Energies nouvelles, 92852 Rueil-Malmaison (FR)
(72) Inventeur: LE BERR, Fabrice, 92852 RUEIL-MALMAISON CEDEX (FR); MILOSAVLJEVIC, Misa, 92852 RUEIL-MALMAISON CEDEX (FR); MARTINEZ ALVARADO, Luis Enrique, 92852 RUEIL-MALMAISON CEDEX (FR); PENIN, Véronique, 92852 RUEIL-MALMAISON CEDEX (FR)
(74) Mandataire: IFP Energies nouvelles
(86) Numéro de dépôt international: PCT/EP2019/051631
(87) Numéro de publication internationale: WO 2019/158330

(56) Documents cités:
- EP-A2- 2 506 397
- WO-A1-2015/061242
- FR-A1- 3 051 516

## Description

La présente invention se rapporte à un dispositif de compression à assistance électrique d'un fluide de travail, tel qu'un fluide liquide ou un fluide gazeux.

Elle concerne notamment un dispositif pour comprimer un fluide gazeux, ici de l'air, par un compresseur, seul ou associé à une turbine pour former un turbocompresseur, pour ensuite l'envoyer vers tous appareils et plus particulièrement à l'admission d'un moteur à combustion interne.

En effet, comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un compresseur seul entraîné électriquement par une machine électrique (compresseur électrifié), ou par un compresseur associé à une turbine et à une machine électrique pour former un turbocompresseur électrifié.

Dans les deux cas précités, la machine électrique associée au compresseur peut être de plusieurs types.

L'un de ces types est une machine électrique à faible entrefer et bobinages proches du rotor qui permet un guidage optimal du flux magnétique et un rendement optimisé. Ce type de machine électrique présente l'avantage d'une certaine compacité, qui peut parfois devenir problématique pour son refroidissement et qui demande l'utilisation d'un système spécifique pour évacuer ses pertes thermiques.

Afin de ne pas être intrusif sur l'entrée d'air du compresseur, ce type de machine électrique est classiquement positionné au dos du compresseur centrifuge dans le cas d'un compresseur électrifié, ou entre le compresseur et la turbine dans le cas d'un turbocompresseur électrifié, et cela malgré la présence d'un environnement thermique défavorable dans ce dernier cas, car proche de la turbine. Généralement, la liaison entre le compresseur, la turbine et la machine électrique est rigide. Ce type de machine peut aussi être positionné côté compresseur mais à une distance relativement éloignée de l'entrée d'air afin de ne pas perturber cette dernière. La liaison entre le compresseur et la machine est alors rigide ou réalisée à l'aide d'un accouplement mécanique ou magnétique.

Ce type de systèmes est mieux décrit dans les brevets US 2014/0373532, US 8,157,543, US 8,882,478, US 2010/0247342, US 6,449,950, US 7,360,361, EP 0 874 953 ou EP 0 912 821.

Un autre type de machines est une machine électrique à fort entrefer (appelée machine à « Air Gap »), dont l'entrefer peut parfois mesurer plusieurs centimètres afin de laisser passer le fluide de travail dans cet entrefer permettant ainsi une intégration au plus proche des systèmes de compression, dans un environnement thermique nettement plus favorable.

Cette disposition de machine électrique présente néanmoins le désavantage de perturber et limiter le passage du flux magnétique entre le rotor et le stator au travers du grand entrefer, ce qui contribue à limiter le rendement intrinsèque de la machine électrique ainsi que ses performances spécifiques (puissance massique et volumique).

Ce type de machine électrique est notamment décrit dans les brevets EP 1 995 429, US 2013/169074 ou US 2013/043745.

Enfin, un nouveau type de machine est apparu récemment. Il s'agit de la machine à grille statorique, qui est mieux décrit dans les demandes de brevets FR 3 041 831 (WO2017/050577), FR 3 048 022 et FR 3 051 516. Cette machine électrique, dite « à grille statorique », comprend un rotor et un stator. Le stator comporte une multiplicité de passages radiaux disposés circonférentiellement le long du stator, des générateurs de flux magnétique logés dans ces passages radiaux, et un palier de stator recevant le rotor. Les générateurs de flux magnétiques sont par exemples des bobines. Les passages radiaux comportent des galeries de circulation de fluide en regard des générateurs de flux magnétique. De plus, les passages radiaux sont séparés par des dents radiales, appelées également « dents statoriques ».

Cette machine présente l'avantage d'offrir un meilleur compromis en termes de refroidissement et de performances électriques que les deux autres types de machines. En revanche, les faces planes des dents statoriques aux extrémités de la machine sont perpendiculaires à l'écoulement d'air et peuvent donc perturber le flux. L'impact sur l'écoulement de l'air engendre une baisse de performances du compresseur. Par ailleurs, modifier la forme des dents radiales pour améliorer l'écoulement d'air engendrerait un coût plus élevé de la machine. En effet, la réalisation du stator incluant ces dents étant un empilement de feuillards (plaques de fines épaisseurs) métalliques, pour modifier la forme des dents statoriques, il faudrait une géométrie spécifique sur chaque feuillard ou un assemblage particulier de feuillards, ce qui complexifierait à la fois la fabrication, impacterait négativement le coût du système final et la logistique, notamment pour repérer chacun des feuillards indépendamment.

Pour remédier aux inconvénients précités, la présente invention concerne une machine électrique à grille statorique, comprenant un rotor et un stator qui comporte une multiplicité de passages radiaux disposés circonférentiellement le long du stator. Les passages radiaux sont délimités par des dents radiales et des générateurs de flux magnétique sont logés dans les passages radiaux. De plus, les passages radiaux comportent des galeries de circulation de fluide en regard des générateurs de flux magnétique. Pour améliorer le passage de fluide (par exemple de l'air) à travers la machine, la machine électrique comporte au moins un appendice aérodynamique, coaxial avec la machine électrique et agencé à une extrémité longitudinale de la machine électrique. Cet appendice aérodynamique comprend au moins deux parties : la première partie sert de guidage au fluide qui passe à travers les galeries de circulation ; la deuxième partie s'étend radialement le long des dents radiales et a, dans la direction axiale de la machine électrique, un profil aérodynamique pour guider le fluide.

L'invention concerne également un dispositif de compression équipé d'une telle machine électrique et un turbocompresseur électrifié avec ce type de machine.

### Le dispositif selon l'invention

Le dispositif selon l'invention concerne une machine électrique selon la revendication 1.

De manière avantageuse, ledit appendice aérodynamique est fabriqué à partir d'un matériau à faible résistance thermique, de préférence un matériau polymère, préférentiellement un matériau polymère permettant la réalisation de formes complexes.

De préférence, le fluide est de l'air.

De manière avantageuse, ledit appendice aérodynamique a un profil dissymétrique selon le plan médian dudit appendice aérodynamique.

Selon une variante de l'invention, ledit appendice aérodynamique est réalisé par fabrication additive ou par moulage.

Selon un mode de réalisation de l'invention, ledit appendice aérodynamique est réalisé en au moins deux éléments, avec au moins un élément démontable.

De manière avantageuse, le machine électrique comprend deux appendices aérodynamiques situés aux deux extrémités longitudinales de ladite machine électrique.

Préférentiellement, ladite deuxième partie dudit appendice aérodynamique, lorsque ledit appendice aérodynamique est positionné à l'extrémité longitudinale desdites dents radiales située à l'entrée dudit fluide dans lesdites galeries de circulation, a sensiblement un profil en demi-cercle dans une section orthogonale à la direction radiale desdites dents radiales.

De manière préférée, ledit appendice aérodynamique, positionné à l'extrémité longitudinale desdites dents radiales située à l'entrée dudit fluide dans lesdites galeries de circulation, comporte une ogive au centre, de préférence ladite ogive est de forme elliptique d'ordre au moins trois.

Avantageusement, ladite ogive comporte des ouvertures permettant un passage dudit fluide.

Selon un mode de réalisation de l'invention, lesdites ouvertures de ladite ogive guident avantageusement le flux d'air dans l'entrefer pour minimiser les perturbations et la quantité d'air passant dans ledit entrefer.

De manière préférée, lesdites ouvertures de ladite ogive servent de protection contre des débris, la taille des ouvertures étant inférieure à l'épaisseur de l'entrefer.

Selon une variante de l'invention, ladite deuxième partie dudit appendice aérodynamique, lorsque ledit appendice aérodynamique est positionné à l'extrémité longitudinale desdites dents radiales située à la sortie dudit fluide desdites galeries de circulation, est un profil dont l'épaisseur, dans une section perpendiculaire à la direction radiale desdites dents radiales, diminue longitudinalement, l'épaisseur la plus grande étant située au niveau de l'extrémité longitudinale desdites dents radiales.

De manière préférée, ledit appendice aérodynamique positionné à l'extrémité longitudinale desdites dents radiales, située à la sortie dudit fluide desdites galeries de circulation, comporte une dimension longitudinale variable en fonction de sa position radiale, de préférence, la dimension longitudinale diminuant lorsque la position radiale augmente.

Selon une variante de l'invention, ledit appendice aérodynamique positionné à l'extrémité longitudinale desdites dents radiales, située en sortie dudit fluide desdites galeries de circulation, est équipé de volets aérodynamiques mobiles et d'un système de commande associé, lesdits volets aérodynamiques mobiles pour donner une direction avantageuse audit fluide en sortie de ladite machine électrique ou pour réguler le débit du fluide.

L'invention concerne également un dispositif de compression d'un fluide gazeux ou liquide comprenant un moyen de compression avec une admission dudit fluide à comprimer, une sortie dudit fluide comprimé, ledit moyen de compression dudit fluide étant porté par un arbre de compresseur et logé entre ladite admission et ladite sortie, et une machine électrique selon l'une des caractéristiques précédentes, ladite machine électrique étant positionnée en amont, selon le sens du flux de fluide, dudit moyen de compression.

En outre, l'invention concerne aussi un dispositif de turbocompresseur électrifié comprenant un moyen de détente et un dispositif de compression, selon l'une des caractéristiques précédentes, ledit moyen de détente et ledit dispositif de compression étant fixés sur un même arbre de rotation, permettant une mise en rotation commune dudit moyen de détente et dudit dispositif de compression.

### Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre schématiquement l'agencement d'un dispositif de compression électrifié selon un mode de réalisation de l'invention.
La figure 2 illustre schématiquement l'agencement d'un turbocompresseur électrifié selon un mode de réalisation de l'invention.
La figure 3 illustre une vue en perspective de la grille statorique.
La figure 4 illustre une coupe circonférentielle au niveau des dents statoriques d'une vue en perspective d'un mode de réalisation d'un assemblage, selon l'invention, de la grille statorique équipée de deux appendices aérodynamiques.
La figure 5 illustre une vue en perspective d'un assemblage, selon un mode de réalisation de l'invention, de la grille statorique et de l'appendice aérodynamique en amont, au niveau de l'entrée du fluide dans la grille statorique.
La figure 6 illustre une vue en perspective d'un assemblage, selon un mode de réalisation de l'invention, de la grille statorique et de l'appendice aérodynamique en aval, au niveau de la sortie de fluide de la grille statorique.
La figure 7 représente une vue éclatée d'un mode de réalisation d'un assemblage, selon l'invention, de l'appendice aérodynamique en amont, au niveau de l'entrée du fluide dans la grille statorique, de la grille statorique elle-même et de l'appendice aérodynamique en aval, au niveau de la sortie de fluide de la grille statorique.
La figure 8 représente une vue en perspective d'une variante de l'appendice aérodynamique situé en aval de la grille statorique, au niveau de la sortie de fluide de la grille statorique, selon un mode de réalisation de l'invention.
La figure 9 représente une vue en perspective d'une variante de l'appendice aérodynamique situé en amont de la grille statorique, au niveau de l'entrée de fluide de la grille statorique, selon un mode de réalisation de l'invention.
La figure 10a représente une variante d'un mode de réalisation selon l'invention, de coupe longitudinale au niveau des dents statoriques, avec un appendice aérodynamique, en sortie de la grille statorique, de longueur constante en fonction de la position radiale.
La figure 10b représente une variante d'un mode de réalisation selon l'invention, de coupe longitudinale au niveau des dents statoriques, avec un appendice aérodynamique, en sortie de la grille statorique, de longueur variable en fonction de la position radiale.

### Description détaillée de l'invention

L'invention concerne une machine électrique comprenant un rotor et un stator. Le stator comporte une multiplicité de passages radiaux disposés circonférentiellement le long du stator. Les passages radiaux sont délimités par des dents radiales et des générateurs de flux magnétique sont logés dans les passages radiaux. Les générateurs de flux magnétiques sont par exemple, des bobines. De plus, les passages radiaux comportent des galeries de circulation de fluide en regard des générateurs de flux magnétique.

Par ailleurs, la machine électrique comporte au moins un appendice aérodynamique, coaxial avec ladite machine électrique et agencé à une extrémité longitudinale de ladite machine électrique. Cet appendice aérodynamique comprend au moins une première partie de guidage de fluide passant à travers les galeries de circulation et au moins une deuxième partie s'étendant radialement le long d'au moins une desdites dents radiales et ayant, dans la direction axiale de ladite machine électrique, un profil aérodynamique pour guider le fluide. L'utilisation de cet appendice aérodynamique permet de mieux canaliser le flux de fluide, grâce à la première partie de guidage de l'appendice aérodynamique, d'une part et d'éviter les perturbations de l'écoulement aux passages des dents statoriques, grâce à la deuxième partie profilée de l'appendice aérodynamique, d'autre part.

Cette machine est, uniquement à titre d'exemple dans la suite de la description, une machine synchrone à une paire de pôles.

Cela n'écarte en aucune façon toute autre machine électrique, comme des machines synchrones avec plus d'une paire de pôles, des machines asynchrones à rotor bobiné ou à cage d'écureuil et les machines à reluctance.

Selon un mode de réalisation, l'appendice aérodynamique peut être fabriqué à partir d'un matériau à faible résistance thermique, de préférence un matériau polymère. Ainsi, le refroidissement de la grille statorique est amélioré, la faible résistance thermique impliquant un matériau de bonne conductivité thermique. De préférence, le matériau polymère peut être compatible avec une machine de fabrication additive ou avec un procédé de moulage, pour réaliser des formes complexes,

Selon une autre variante de l'invention, l'appendice aérodynamique peut avoir un profil dissymétrique selon son plan médian. Cette particularité a l'avantage de modifier la direction de l'écoulement par exemple, et peut présenter un réel intérêt par exemple pour orienter le flux en sortie, vers un prochain accessoire, comme un compresseur par exemple afin d'améliorer ses performances.

Préférentiellement, l'appendice aérodynamique peut être réalisé par fabrication additive ou par moulage. De cette manière, le coût de l'appendice aérodynamique peut être réduit. Le moulage est particulièrement intéressant pour des pièces réalisées en série car cette technique de fabrication permet une réalisation rapide et un coût réduit. La fabrication additive permet la réalisation de pièces complexes, notamment de pièces non réalisables par moulage.

Selon une variante de réalisation de l'invention, l'appendice aérodynamique peut être réalisé en, au moins, deux éléments, avec au moins un élément démontable. En effet, le flux de fluide peut être chargé d'éléments fluides ou solides agressifs qui peuvent endommager l'appendice aérodynamique. Rendre démontable au moins la partie de l'appendice en contact avec le fluide, potentiellement chargé, permet de pouvoir le remplacer facilement et conserver les performances, électriques et thermiques, de la machine électrique tout en augmentant sa durée de vie. Une partie de l'appendice aérodynamique n'étant pas en contact avec le fluide, celle-ci peut être conservée sur toute la durée de vie de la machine électrique.

De préférence, la machine électrique peut comprendre deux appendices aérodynamiques situés aux deux extrémités longitudinales de la machine électrique. Ainsi, l'écoulement de fluide est canalisé à l'entrée et à la sortie du fluide dans la grille statorique, ce qui permet d'améliorer les performances et le refroidissement de la machine électrique, de limiter les pertes de charge et d'optimiser les performances d'un composant qui se trouverait en sortie, comme un compresseur par exemple.

Selon une variante de l'invention, la deuxième partie de l'appendice aérodynamique, lorsqu'il est positionné à l'extrémité longitudinale des dents radiales située à l'entrée du fluide dans les galeries de circulation, peut avoir sensiblement un profil en demi-cercle dans une section orthogonale à la direction radiale desdites dents radiales. Ce profil aérodynamique de section en demi-cercle permet de limiter le risque de perturbations de l'écoulement au niveau de l'entrée du fluide dans la grille statorique.

Selon une variante de l'invention, l'appendice aérodynamique, positionné à l'extrémité longitudinale des dents radiales située à l'entrée du fluide dans les galeries de circulation, peut comporter une ogive au centre. L'ogive a une forme de révolution avec un diamètre croissant dans la direction longitudinale et dans le sens du flux de circulation du fluide, de manière à diriger le flux progressivement. De préférence, l'ogive est de forme elliptique d'ordre au moins trois. L'ogive permet d'orienter le flux dans les galeries de circulation, en limitant au maximum les perturbations de l'écoulement dans cette zone. Cette caractéristique est particulièrement vérifiée lorsque l'ogive est de forme elliptique d'ordre au moins trois, dans la direction longitudinale. L'ogive a également l'avantage de protéger le rotor et l'entrefer du flux de circulation de fluide et des éventuels éléments solides qui pourraient dégrader le rotor ou l'entrefer et ainsi dégrader les performances de la machine électrique. L'ogive est coaxiale du rotor, de l'arbre de rotation et/ou du stator de la machine électrique. Préférentiellement, l'ogive, au niveau de son extrémité la plus proche de la grille statorique, a une forme extérieure sensiblement cylindrique et de préférence avec un diamètre supérieur à celui du diamètre du rotor.

Selon un variante de ce mode de réalisation, lorsque l'appendice aérodynamique comporte une ogive, l'ogive peut comporter des ouvertures permettant un passage de fluide dans l'entrefer. Préférentiellement, ce mode de réalisation peut être utilisé lorsque le fluide caloporteur ne comporte pas d'éléments agressifs chimiques ou mécaniques (particules solides par exemple) risquant de détériorer le rotor et/ou l'entrefer. Permettre un passage de fluide dans l'entrefer, par l'utilisation d'ouvertures dans l'ogive permet de mieux refroidir le rotor, et donc de maintenir les performances de la machine électrique, tout en minimisant les pertes de charge de l'écoulement complet. De préférence, ces ouvertures ont une taille inférieure à l'épaisseur de l'entrefer, de manière à empêcher à des débris de passer dans l'entrefer et de le boucher.

De manière alternative, l'appendice aérodynamique, positionné à l'extrémité longitudinale des dents radiales située à l'entrée du fluide dans les galeries de circulation, peut comporter une couronne interne sous la forme d'un anneau interne ou d'un disque plein, en lieu et place de l'ogive décrite précédemment. Cette couronne interne permet de relier les parois de profil aérodynamique entre elles et ainsi de renforcer mécaniquement l'appendice aérodynamique.

L'utilisation d'un disque plein pour la couronne interne permet d'éviter au fluide de pénétrer dans l'entrefer. Si ce fluide est chargé d'agents chimiques ou mécaniques (particules solides par exemple) agressifs, le disque plein permet de protéger le rotor et l'entrefer de ces agents.

Au contraire, l'utilisation d'un anneau interne pour la couronne interne, l'anneau interne étant caractérisé par un diamètre externe et un diamètre interne non nul, permet au fluide de pouvoir pénétrer dans l'entrefer. Cette particularité permet d'améliorer le refroidissement du rotor et donc d'améliorer les performances de la machine électrique. Cela est particulièrement intéressant lorsque le fluide est exempt d'agents chimiques ou mécaniques (particules solides par exemple) agressifs.

Selon une autre variante de l'invention, la deuxième partie de l'appendice aérodynamique, lorsqu'il est positionné à l'extrémité longitudinale des dents radiales situées à la sortie du fluide des galeries de circulation, peut être un profil dont l'épaisseur, dans une section perpendiculaire à la direction radiale des dents radiales, peut diminuer longitudinalement, l'épaisseur la plus grande étant située au niveau de l'extrémité longitudinale des dents radiales. Ce profil aérodynamique de section effilée dont l'épaisseur diminue progressivement permet de limiter le risque de perturbations de l'écoulement en sortie du fluide de la grille statorique. Ce profil peut notamment se terminer par une pointe afin de recoller les écoulements provenant de deux galeries de circulation adjacentes, en limitant au maximum les perturbations et les pertes de charge.

De manière préférée, l'appendice aérodynamique positionné à l'extrémité longitudinale des dents radiales, situé à la sortie du fluide des galeries de circulation, peut comporter une dimension longitudinale variable en fonction de sa position radiale. De préférence, la dimension longitudinale peut diminuer lorsque la position radiale augmente. Ainsi, l'aérodynamisme en sortie des dents radiales est améliorée car le flux peut se recoller en limitant les perturbations aérodynamiques.

Selon une variante de l'invention, l'appendice aérodynamique positionné à l'extrémité longitudinale des dents radiales, situé en sortie du fluide des galeries de circulation, peut être équipé de volets mobiles et d'un système de commande associé, les volets mobiles permettant de modifier le profil aérodynamique en sortie de la machine électrique. Cette fonction permet d'optimiser la direction du flux de fluide, en fonction de la machine électrique, du compresseur et des performances attendues au système global.

L'invention concerne également un dispositif de compression d'un fluide gazeux ou liquide comprenant un moyen de compression (compresseur par exemple) avec une admission du fluide à comprimer, une sortie du fluide comprimé. Le moyen de compression du fluide est porté par un arbre de compresseur et logé entre l'admission et la sortie. Le dispositif comporte également une machine électrique selon l'un des modes de réalisation décrits précédemment, la machine électrique étant positionnée en amont, selon le sens du flux de fluide, du moyen de compression. L'utilisation de la machine électrique décrite précédemment pour un compresseur électrifié permet d'améliorer les performances de refroidissement de la machine électrique, augmentant ainsi ses performances et sa durée de vie, tout en offrant au compresseur, un flux de circulation du fluide minimisant les pertes de charge au sein de la machine électrique, et limitant les perturbations aérodynamiques à l'entrée du compresseur, permettant d'améliorer les performances de compression.

L'invention concerne également un dispositif de turbocompresseur électrifié comprenant un moyen de détente (turbine par exemple) et un dispositif de compression électrifié, tel que défini précédemment. Le moyen de détente et le dispositif de compression sont fixés sur un même arbre de rotation, permettant une mise en rotation commune du moyen de détente et du dispositif de compression. En utilisant le dispositif de compression électrifié défini précédemment, les performances de compression sont améliorées et donc les performances du turbocompresseur seront également supérieures, le débit de fluide à l'entrée de la turbine étant augmenté par l'accroissement de performance du compresseur.

Par ailleurs, le compresseur peut être équipé d'une recirculation, appelée « ported shroud », qui permet à une partie des gaz comprimés par le compresseur d'être rejetée en amont du compresseur. Cette recirculation d'une partie des gaz comprimés permet d'éviter le phénomène de pompage qui peut se produire dans certaines conditions de fonctionnement (faible débit, forte différence de pression entre l'entrée et la sortie du compresseur) et qui peut entraîner une inversion instationnaire de la direction du flux dans le compresseur. Lorsqu'il se produit, ce pompage peut entraîner des dommages très importants au niveau du compresseur.

Dans le cas où le compresseur est équipé de « ported shroud », un bord de fuite pour lequel la longueur de la paroi de profil aérodynamique 92 de l'appendice aérodynamique aval 90 diminue lorsque sa position radiale augmente est particulièrement avantageux. En effet, la longueur réduite au niveau du diamètre extérieur permet de diminuer le sillage sur le rayon externe et empêche ainsi un fonctionnement intempestif du ported shroud lorsque cela n'est pas nécessaire, permettant ainsi d'améliorer le rendement du compresseur. Conserver une longueur plus grande sur le diamètre interne permet au contraire d'éviter une perturbation du sillage au niveau de l'entrée du compresseur.

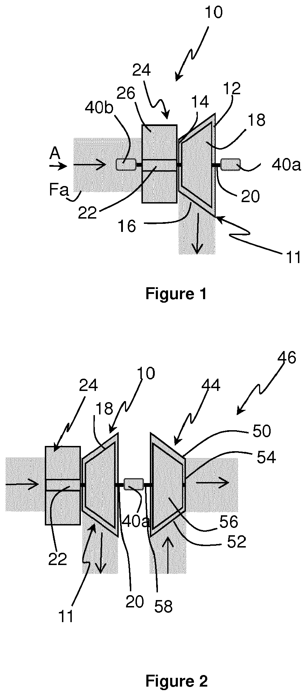

La figure 1 est, schématiquement et de manière non limitative, une illustration d'un dispositif de compression 10 à assistance électrique d'un fluide de travail, tel qu'un fluide liquide ou fluide gazeux.

Ce dispositif est en particulier utilisé en tant que compresseur d'un fluide contrôlé par une machine électrique, et sera dénommé dans la suite en tant que compresseur électrifié.

Le compresseur 11, ici par exemple de type compresseur centrifuge à roue à ailettes, comprend un carter 12 avec une admission 14 de fluide gazeux, comme de l'air ou un mélange d'air (pouvant contenir des gaz d'échappement), et une sortie 16 de fluide comprimé.

Ce carter 12 loge un moyen de compression sous la forme d'une roue de compresseur 18 placée entre l'admission et la sortie et qui est soumise à un mouvement de rotation sur un arbre 20.

Cet arbre 20 est lié en rotation avec un rotor 22 d'une machine électrique 24 placée en regard de l'admission 14 et en amont de cette admission en considérant la veine de fluide gazeux Fa qui circule de la gauche vers la droite de la figure 1.

Comme décrit ci-après, la machine électrique, qui est utilisée en tant que machine motrice, a la particularité d'avoir une configuration telle que le fluide gazeux traverse le stator de cette machine pour être amené à l'admission 14 du compresseur.

Dans l'exemple de la figure 1, la machine électrique est placée sur l'admission 14 en y étant fixée par tous moyens connus comme par vissage.

L'exemple de la figure 2 illustre, schématiquement et de manière non limitative, un dispositif de compression 10 d'un fluide, gazeux ou liquide, qui est associé à un dispositif de détente 44.

L'ensemble ainsi formé est plus connu sous le terme de turbocompresseur 46.

Comme pour la figure 1, le dispositif de compression 10 comprend un compresseur 11 et une machine électrique 24 dont le rotor 22 est relié à l'arbre 20 de la roue 18 de compresseur.

Le dispositif de détente 44 comprend une turbine avec un carter 50 portant une entrée 52 de fluide (de l'air chaud comprimé par exemple ou comme les gaz d'échappement d'un moteur à combustion interne), et une sortie 54 de fluide détendu. Une roue de turbine 56, ici une roue à ailettes, est placée dans le carter 50 entre l'entrée et la sortie en étant portée par un arbre 58 de roue de turbine. Cet arbre 58 est lié en rotation avec l'ensemble formé par le rotor 22 de la machine électrique et l'arbre 20 de roue de compresseur.

Le rotor 22, l'arbre de roue de compresseur 20 et l'arbre 58 de roue de turbine forment ainsi un ensemble monobloc qui est supporté par un palier 40a.

Pour cet exemple de la figure 2, il est ainsi possible d'entraîner le compresseur par la turbine seule, la machine électrique pouvant alors assurer une fonction de génératrice de courant sous l'effet de la rotation du rotor 22 si la puissance fournie par la turbine est supérieure à la puissance nécessaire au fonctionnement du compresseur.

Il est également possible d'entraîner le compresseur par la turbine et par la machine électrique utilisée en tant que moteur électrique, ce qui permet d'accroître les performances dynamique et statique du turbocompresseur, notamment d'augmenter le taux de compression pour un taux de détente donné et favoriser l'activation et la montée en régime du compresseur (réduction du temps de réponse du turbocompresseur).

Il est à noter qu'un traitement surfacique du stator et du rotor rend cette machine compatible avec l'admission d'un fluide corrosif, tel que les gaz d'échappement d'un moteur qui peuvent être mélangés avec de l'air.

De plus, ce type de machine peut notamment être intégré assez simplement sur un système de turbocompresseur existant sans nécessiter de modifications profondes du système original.

Dans ce type d'architecture, le rotor de la machine électrique peut notamment assurer la fonction de l'écrou de serrage côté compresseur.

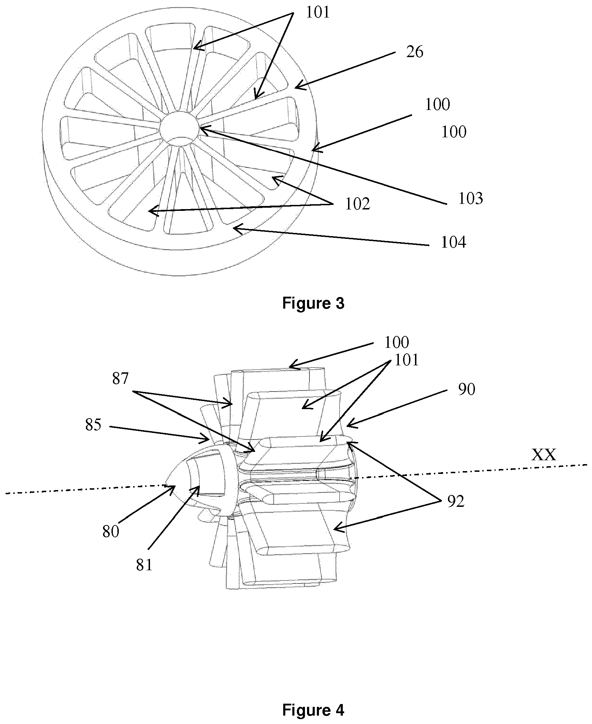

La figure 3 illustre, schématiquement et de manière non limitative, un exemple de grille statorique 100 de machine électrique à grille statorique, machine plus longuement décrite dans les demandes de brevet FR 3 041 831 (WO2017/050577) et FR 3 048 022. La grille statorique 100 comprend des dents radiales 101 (également appelées « dents statoriques »), et des passages radiaux de fluide 102 (par exemple, 12 passages radiaux et 12 dents radiales dans l'exemple non limitatif de la figure 3). Ces passages radiaux 102 servent à la fois de galeries de circulation pour le fluide de travail et à la fois pour le montage des bobines. Les dents statoriques 101 s'étendent depuis un anneau central 103, continu ou discontinu, par exemple avec des encoches, jusqu'à un anneau externe 104. Les surfaces aux extrémités longitudinales des anneaux interne 103 et externe 104 ainsi que les surfaces aux extrémités longitudinales des dents radiales 101 sont planes et coplanaires et forment ainsi les surfaces 26. Les passages radiaux sont délimités par les deux anneaux interne 103 et externe 104 ainsi que par les dents radiales 101.

La figure 4 illustre, schématiquement et de manière non limitative, une coupe circonférentielle d'un assemblage grille statorique 100, d'un appendice aérodynamique 85 selon un mode de réalisation de l'invention, en amont de l'entrée de fluide (par exemple de l'air) dans la grille statorique 100, et d'un appendice aérodynamique 90 selon un mode de réalisation de l'invention, en aval de la sortie de fluide de la grille statorique 100. Sur cette figure 4, les premières parties de guidage de flux de circulation du fluide des appendices aérodynamiques 85 et 90 ne sont pas représentées. L'axe XX représente l'axe longitudinal de la machine électrique, commun avec l'axe du stator, l'axe du rotor et l'axe des appendices aérodynamiques 85 et 90. Cette coupe circonférentielle permet notamment de visualiser le profil global au niveau de l'assemblage au niveau des dents statoriques. Ce profil global comporte un profil arrondi 87, par exemple un demi-cercle, sur l'appendice aérodynamique 85 en amont, la section par exemple rectangulaire ou d'épaisseur constante des dents statoriques 101 de la grille statorique 100, et un profil effilé 92, dont l'épaisseur diminue progressivement (ellipse d'ordre 3 et plus), sur l'appendice aérodynamique 90 en aval. L'extrémité du profil effilé 92 peut être arrondie ou pointue de manière à améliorer le recollement des écoulements provenant de différentes galeries de circulation adjacentes. Sur la figure 4, le profil effilé 92 sur l'appendice aérodynamique 90 situé en aval a une dimension longitudinale (longueur) variable en fonction de la position radiale.

L'appendice aérodynamique 85 en amont dispose également d'une ogive 80, placée au centre, coaxiale du stator et de la grille statorique 100. Cette ogive 80 s'étend depuis la grille statorique 100, où elle est sensiblement cylindrique et de rayon supérieur au rayon du rotor, dans la direction longitudinale, dans le sens opposé au flux de circulation du fluide. Son extrémité peut être pointue, comme sur la figure 4 ou arrondie. Ainsi, le flux de circulation qui arrive, rencontre d'abord l'ogive 80, par sa pointe ou son extrémité arrondie. Le flux de circulation est ensuite guidée par la paroi externe de l'ogive 80 vers les galeries de circulation de fluide, délimitées par les dents radiales 101.

L'ogive 80 dispose, sur l'exemple de la figure 4, d'ouvertures 81 permettant le passage de fluide dans l'ogive 80 pour refroidir le rotor et l'entrefer. Cette configuration est notamment pertinente lorsque le fluide caloporteur est exempt d'agents chimiques agressifs et de particules solides qui pourraient endommager le rotor et/ou l'entrefer.

Lorsque le fluide caloporteur est chargé d'agents chimiques agressifs ou de particules solides qui peuvent endommager le rotor ou l'entrefer, l'ogive 80 est préférentiellement sans ouvertures 81. Ainsi, le fluide ne peut pas entrer dans la zone de l'entrefer et ainsi l'entrefer et le rotor sont protégés.

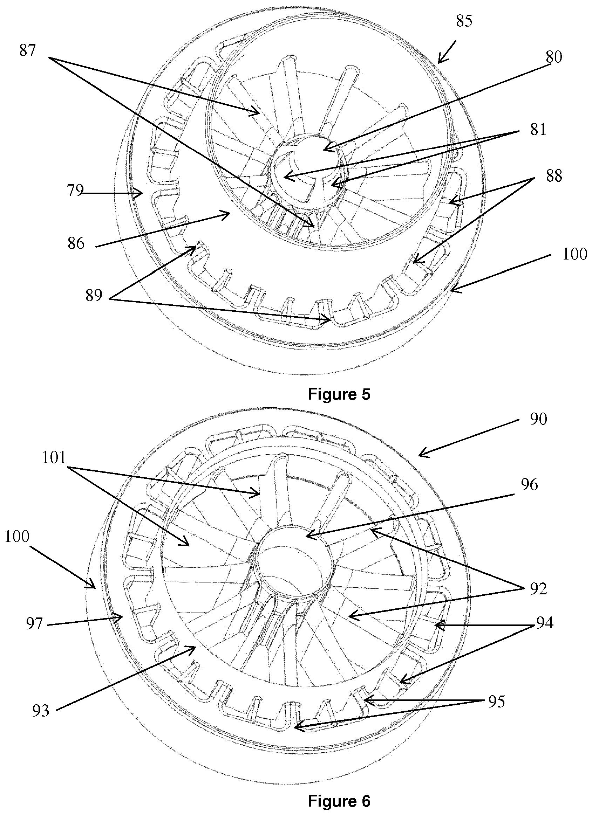

La figure 5 illustre, schématiquement et de manière non limitative, un mode de réalisation de l'appendice aérodynamique 85 en amont (alors que la figure 4 est une coupe circonférentielle au niveau des dents) monté sur la grille statorique 100. L'appendice aérodynamique, dispose, en plus du profil aérodynamique 87 en amont des dents, une paroi cylindrique 86 servant à guider le flux de circulation de fluide à l'intérieur de cette paroi. Le flux de circulation de fluide passe ainsi totalement dans le conduit défini par le diamètre interne de la paroi cylindrique 86. Cette paroi cylindrique 86 permet aussi d'isoler les bobinages du contact direct avec le fluide.

L'appendice aérodynamique 85 peut également comprendre une ogive centrale, coaxiale du stator. L'ogive 80 peut, ou non, comprendre des ouvertures 81 pour le passage du flux de fluide (air par exemple) vers l'entrefer et le rotor (non visible sur la figure 5) et ainsi refroidir le rotor. L'ogive est fixée avec les profils aérodynamiques 87 recouvrant les dents radiales 101. Ainsi, l'ogive participe à la rigidité de l'assemblage.

Lorsqu'aucune ogive n'est utilisée, une couronne interne peut être mise en remplacement. La fonction de cette couronne interne est alors de relier les profils aérodynamiques 87 recouvrant les dents radiales 101 sur leur diamètre interne afin d'assurer la rigidité de l'ensemble de l'appendice aérodynamique 85.

A l'extérieur de cette paroi cylindrique 86, aucun flux ne circule. En revanche, l'appendice aérodynamique 85 dispose de parois radiales 89 recouvrant les dents radiales, ces parois radiales 89 étant situées à l'extérieur de l'espace délimité par la paroi cylindrique 86 et en prolongement des parois de profil aérodynamique 87. De plus, l'appendice aérodynamique 85 dispose de parois radiales 88 complémentaires aux parois radiales 89 recouvrant les dents radiales. Ces parois radiales 88 servent à délimiter les espaces des bobines (non représentées) qui entourent les dents radiales. Les parois radiales 88 et 89 sont maintenues sur leur diamètre extérieur par une couronne externe 79. La couronne externe vient en appui, sur une de ces extrémités longitudinales sur la surface 26 de la grille statorique 100. Cette extrémité est donc une surface plane pour assurer un contact optimal. L'autre extrémité de cette couronne externe 79 est également une surface plane, coplanaire de l'extrémité longitudinale des parois radiales 89.

La partie de l'appendice aérodynamique 85 délimitée par la paroi cylindrique 86 est soumise à un flux de circulation qui peut ainsi l'endommager. Il peut être intéressant de prévoir que cette partie de l'appendice aérodynamique 85, comprenant la paroi cylindrique 86, les parois de profil aérodynamique 87 recouvrant les dents radiales 101, et la couronne interne (non représentée) ou l'ogive 80 lorsqu'elle est présente, puisse être démontable pour être remplacée si besoin.

La partie extérieure à la paroi cylindrique 86, peut éventuellement être non démontable. Ainsi, l'appendice aérodynamique 85 peut être constituée de deux parties : une première partie démontable comprenant la paroi cylindrique 86, la couronne interne ou l'ogive 80 lorsqu'elle est présente et les parois de profil aérodynamique 87 recouvrant les dents radiales 101 ; une seconde partie non démontable comprenant la couronne externe 79 et les parois radiales 88 et 89.

Les zones de raccordements géométriques disposent de congé de raccordement ou de chanfreins, de manière à éviter tout risque de perturbations de circulation de fluide.

La figure 6 illustre, schématiquement et de manière non limitative, un mode de réalisation d'un appendice aérodynamique 90 en aval (alors que la figure 4 est une coupe circonférentielle au niveau des dents) monté sur la grille statorique 100. L'appendice aérodynamique 90, dispose, en plus du profil aérodynamique 92 en aval des dents radiales 101, une paroi cylindrique 93 servant à guider le flux de fluide sortant des galeries de circulation de fluide, délimitées par les dents radiales 101, à l'intérieur de cette paroi cylindrique 93. Le flux de circulation sortant des galeries de circulation de fluide passe ainsi totalement dans le conduit défini par le diamètre interne de la paroi cylindrique 93.

L'appendice aérodynamique 90 comprend également une paroi cylindrique interne 96 permettant d'assurer la liaison et la tenue mécanique des parois de profil aérodynamique 92 entre-elles.

A l'extérieur de cette paroi cylindrique 93, aucun flux ne circule. En revanche, l'appendice aérodynamique 90 dispose de parois radiales 95 recouvrant les dents radiales, ces parois radiales 95 étant situées à l'extérieur de l'espace délimité par la paroi cylindrique 93 et en prolongement des parois de profil aérodynamique 92. De plus, l'appendice aérodynamique 90 dispose de parois radiales 94 complémentaires aux parois radiales 95 recouvrant les dents radiales. Ces parois radiales 94 servent à délimiter les espaces des bobines (non représentées) qui entourent les dents radiales.

Par ailleurs, l'appendice aérodynamique 90 comprend une couronne externe 97, par exemple cylindrique, dont le diamètre est sensiblement égal au diamètre de la grille statorique 100. Les extrémités longitudinales de cette couronne externe 97 sont planes. D'un côté, elle est en contact sur la surface de la grille statorique 100. L'autre extrémité de surface plane de la couronne externe 97 est coplanaire de l'extrémité longitudinale des parois radiales 95. Cette couronne permet de maintenir l'ensemble des parois radiales 92 et 95, dans le prolongement des parois 92, et des parois radiales 94 entre-elles. Ainsi, la résistance mécanique de l'appendice aérodynamique 90, dans son ensemble, est assurée.

La partie de l'appendice aérodynamique 90 délimitée par la paroi cylindrique 93 est soumise à un flux de circulation qui peut ainsi l'endommager. Il peut être intéressant de prévoir que cette partie de l'appendice aérodynamique, comprenant la paroi cylindrique 93, et le profil aérodynamique 92 recouvrant les dents radiales 101, et la paroi cylindrique interne 96, puisse être démontable pour être remplacée si besoin.

La partie extérieure à la paroi cylindrique 93, peut éventuellement être non démontable. Ainsi, l'appendice aérodynamique 90 peut être constituée de deux parties : une première partie démontable comprenant la paroi cylindrique 93, la paroi cylindrique interne 96 et les parois de profil aérodynamique 92 recouvrant les dents radiales 101 ; une seconde partie non démontable comprenant la couronne externe 97 et/ou les parois radiales 94 et 95.

On observe également que les zones de raccordements géométriques disposent de congés de raccordement ou de chanfreins, de manière à éviter tout risque de perturbations de circulation de fluide.

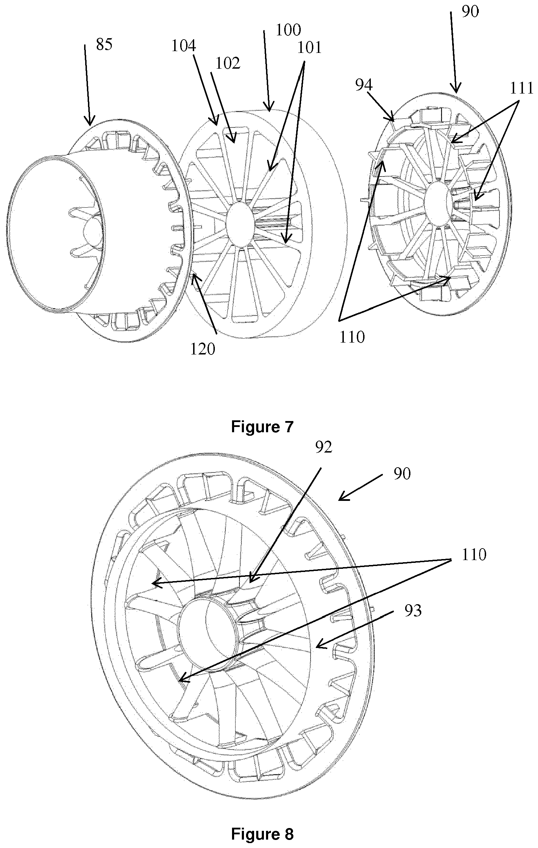

La figure 7 représente, schématiquement et de manière non limitative, une vue éclatée d'un assemblage, selon un mode de réalisation de l'invention, de la grille statorique 100 et de deux appendices aérodynamiques 85 et 90, situés respectivement en amont et en aval de la grille statorique 100, dans le sens du flux de circulation de fluide. Les deux appendices correspondent à ceux décrits en rapport avec les figures 5 et 6.

Ces deux appendices aérodynamiques 85 et 90 sont équipés d'organes de montage 110 et 120, intégrés directement aux appendices aérodynamiques 85 et 90. Les organes de montage 110 permettent de monter l'appendice aérodynamique 90 dans la grille statorique 100, ces organes de montage 110 s'engageant dans les voiles radiaux 102, dans la partie externe, délimitée par l'anneau externe 104 et les dents statoriques 101. L'organe de montage 110 comprend une prolongation des parois radiales 94, dans la direction longitudinale s'étendant de l'extrémité externe vers l'intérieur, dans le sens opposé à la direction du flux, de manière à ce que ces parois radiales 94 pénètrent dans les voiles radiaux 102.

L'organe de montage 110 comprend également une portion de paroi cylindrique 111, la paroi radiale 94 et la paroi cylindrique 111 formant une section sensiblement de forme d'un « T », la portion de paroi cylindrique 111 prolongeant la paroi cylindrique 93, dans le sens longitudinal, dans le sens opposé au flux, de manière à pénétrer dans les voiles radiaux 102 de la grille statorique 100. La jonction entre la paroi radiale 94 et la paroi cylindrique 111, formant le T, est réalisée au niveau de l'extrémité radiale interne de la paroi radiale 94 et à environ mi-longueur circonférentielle de la portion de paroi cylindrique 111. Le nombre d'organes de montage 110 est égal au nombre de voiles radiaux 102 de la grille statorique 100 (12 organes de montage 110 en figure 7).

Les organes de montage 110 permettent le positionnement de l'appendice aérodynamique 90 sur la grille statorique 100 et d'éviter toute rotation relative de ces deux pièces, la rotation relative de ces pièces pourrait gêner le flux de circulation du fluide.

Les organes de montage 110 font partie intégrante de l'appendice aérodynamique 90.

Les organes de montage 120 de l'appendice aérodynamique 85 sont sensiblement symétriques aux organes de montage 110 de l'appendice aérodynamique 90 par rapport au plan médian de la grille statorique 100, plan orthogonal à l'axe longitudinal.

La figure 8 représente, schématiquement et de manière non limitative, l'appendice aérodynamique 90 des figures 6 et 7 seul, contrairement à la figure 6 qui le représente monté sur la grille statorique 100. La figure 8 permet de visualiser d'une part le profil aérodynamique 92 et la partie extérieure 93 de l'appendice aérodynamique, et d'autre part les organes de montage 110 qui pénètrent dans la grille statorique 100 et qui sont non visibles sur la figure 6.

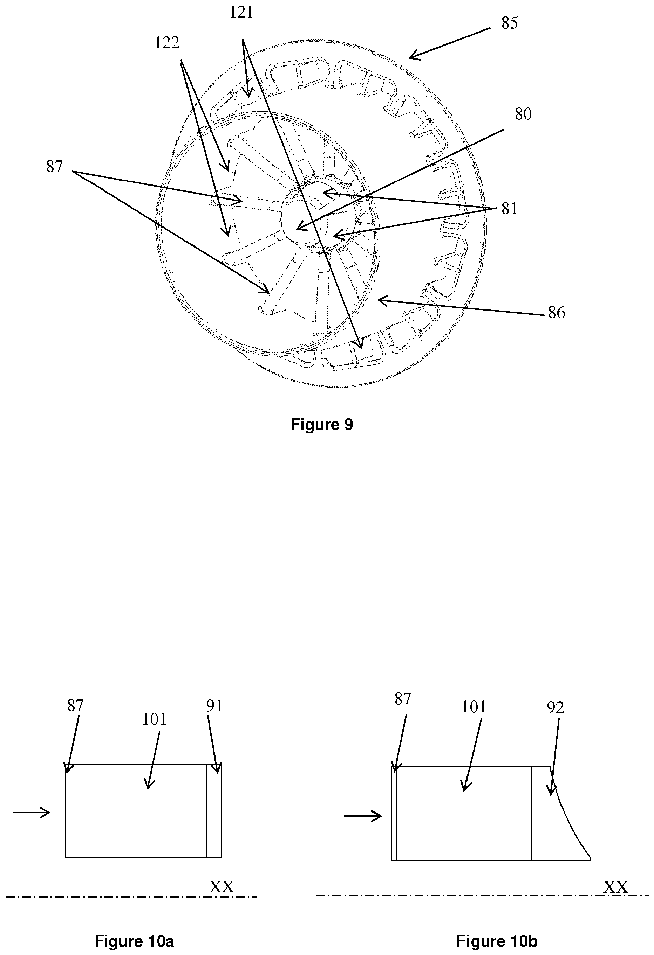

La figure 9 représente, schématiquement et de manière non limitative, l'appendice aérodynamique 85 des figures 5 et 7 seul, contrairement à la figure 5 qui le représente monté sur la grille statorique 100.L'appendice aérodynamique 85 comprend des profils aérodynamiques 87, une partie extérieure 86, une ogive 80 munie d'ouvertures 81. En outre, la figure 9 permet de visualiser que les organes de montage 120 comportent des parois radiales 121 prolongeant les parois radiales 88, dans le sens du flux de manière à pénétrer dans la grille statorique 100, les parois radiales 121 étant semblables aux parois 94 des organes de montage 110, et des portions de parois cylindriques 122, prolongeant longitudinalement la paroi cylindrique 87 dans le sens du flux, de manière à pénétrer dans la grille statorique, les portions de parois cylindriques 122 étant semblables aux portions de parois cylindriques 111 des organes de montage 110. Les organes de montage 120 sont semblables aux organes de montage 110, les parois radiales 121 et portions de parois cylindriques 122 formant une section sensiblement de forme d'un « T », la jonction entre la paroi radiale 121 et la portion de paroi cylindrique 122 est réalisée au niveau de l'extrémité radiale interne de la paroi radiale 121 et à environ mi-longueur circonférentielle de la portion de paroi cylindrique 122. Le nombre d'organes de montage 120 est égal au nombre de voiles radiaux 102 de la grille statorique 100 (12 organes de montage 120 par exemple).

Les organes de montage 120 permettent le positionnement de l'appendice aérodynamique 85 sur la grille statorique 100 et d'éviter toute rotation relative de ces deux pièces, la rotation relative de ces pièces pourrait gêner le flux de circulation du fluide.

Les organes de montage 120 font partie intégrante de l'appendice aérodynamique 85.

La figure 10a représente, schématiquement et de manière non limitative, une coupe dans un plan défini par l'axe longitudinal XX de la machine électrique (axe horizontal) et par un axe radial d'une dent radiale 101 d'un mode de réalisation selon l'invention.

Cette figure montre la paroi de profil aérodynamique 87 de l'appendice aérodynamique amont 85, la dent statorique 101 et la paroi de profil aérodynamique 91 de l'appendice aérodynamique aval 90. Dans cette configuration, chacune de ces trois pièces a une longueur constante, suivant l'axe longitudinal XX, en fonction de la position radiale de la pièce considérée. De plus, les surfaces d'extrémités longitudinales de la paroi de profil aérodynamique 87 de l'appendice aérodynamique amont 85, de la dent statorique 101 et de la paroi de profil aérodynamique 91 de l'appendice aérodynamique aval 90 sont toutes perpendiculaires à l'axe XX. Notamment, la paroi de profil aérodynamique 91, se termine par une partie droite, orthogonale à l'axe XX et au flux de circulation du fluide.

La figure 10b représente, schématiquement et de manière non limitative, une coupe dans un plan défini par l'axe longitudinal XX de la machine électrique (axe horizontal) et par un axe radial d'une dent radiale 101, d'une variante de réalisation selon l'invention.

Cette figure montre la paroi de profil aérodynamique 87 de l'appendice aérodynamique amont 85, la dent statorique 101 et la paroi de profil aérodynamique 92 de l'appendice aérodynamique aval 90. Dans cette configuration, la paroi de profil aérodynamique 87 de l'appendice aérodynamique amont 85 et la dent statorique 101 ont une longueur constante en fonction de la position radiale de la dent et leurs surfaces d'extrémités longitudinales sont toutes perpendiculaires à l'axe XX. En revanche, la longueur de la paroi de profil aérodynamique 92 de l'appendice aérodynamique aval 90, dépend de sa position radiale : la longueur n'est pas constante mais est variable en fonction de la position radiale La surface d'extrémité longitudinale en amont, selon le sens du flux de circulation de fluide, de la paroi de profil aérodynamique 92 est perpendiculaire à l'axe XX. En revanche, la surface d'extrémité longitudinale en aval, selon le sens du flux de circulation de fluide, de la paroi de profil aérodynamique 92 n'est pas perpendiculaire à l'axe XX. Préférentiellement, la longueur de la paroi de profil aérodynamique 92 de l'appendice aérodynamique aval 90 diminue lorsque sa position radiale augmente. La longueur de la paroi de profil aérodynamique 92 de l'appendice aérodynamique aval 90 est la plus grande au niveau de son rayon interne ; la longueur la plus petite de la paroi de profil aérodynamique 92 de l'appendice aérodynamique aval 90 se trouve au niveau de son rayon le plus grand. Cette caractéristique permet d'améliorer la circulation du flux de circulation en sortie de la machine électrique en limitant ses perturbations et les pertes de charge. Cela est particulièrement intéressant lorsqu'un compresseur est situé juste en sortie de la machine électrique car ainsi, le flux de circulation de fluide entrant dans le compresseur permet un rendement du compresseur optimal.

## Revendications

1. Machine électrique (24) comprenant un rotor (22) et un stator (24) comportant une multiplicité de passages radiaux (102) disposés circonférentiellement le long dudit stator (24), lesdits passages radiaux (102) étant délimités par des dents radiales (101), des générateurs de flux magnétique logés dans lesdits passages radiaux (102), lesdits passages radiaux (102) comportant des galeries de circulation de fluide en regard desdits générateurs de flux magnétique, la machine électrique (24) comportant au moins un appendice aérodynamique (85, 90), ledit appendice aérodynamique (85, 90) étant coaxial avec ladite machine électrique (24), et agencé à une extrémité longitudinale de ladite machine électrique (24), ledit appendice aérodynamique (85, 90) comprenant au moins une première partie de guidage de fluide passant à travers lesdites galeries de circulation et au moins une deuxième partie, ladite deuxième partie s'étendant radialement le long d'au moins une desdites dents radiales (101) et ayant, dans la direction axiale de ladite machine électrique (24), un profil aérodynamique (87, 91, 92) pour guider le fluide, **caractérisée en ce que** ledit appendice aérodynamique (85, 90) comprend en plus du profil aérodynamique (87, 91, 92) une paroi cylindrique (86, 93) pour guider le flux à l'intérieur de cette paroi (86, 93).

2. Machine électrique selon la revendication 1, dans laquelle ledit appendice aérodynamique (85, 90) est fabriqué à partir d'un matériau à faible résistance thermique, de préférence un matériau polymère.

3. Machine électrique selon l'une des revendications précédentes, pour laquelle le fluide est de l'air.

4. Machine électrique selon l'une des revendications précédentes, pour laquelle ledit appendice aérodynamique (85, 90) a un profil dissymétrique selon le plan médian dudit appendice aérodynamique (85, 90).

5. Machine électrique selon l'une des revendications précédentes pour laquelle ledit appendice aérodynamique (85, 90) est réalisé par fabrication additive ou par moulage.

6. Machine électrique selon l'une des revendications précédentes, pour laquelle ledit appendice aérodynamique (85, 90) est réalisé en au moins deux éléments, avec au moins un élément démontable.

7. Machine électrique selon l'une des revendication précédentes comprenant deux appendices aérodynamiques (85, 90) situés aux deux extrémités longitudinales de ladite machine électrique (24).

8. Machine électrique selon l'une des revendications précédentes, pour laquelle ladite deuxième partie dudit appendice aérodynamique (85, 90), lorsque ledit appendice aérodynamique (85, 90) est positionné à l'extrémité longitudinale desdites dents radiales (101) située à l'entrée dudit fluide dans lesdites galeries de circulation, a sensiblement un profil en demi-cercle dans une section orthogonale à la direction radiale desdites dents radiales (101).

9. Machine électrique selon l'une des revendications précédentes, pour laquelle ledit appendice aérodynamique (85, 90), positionné à l'extrémité longitudinale desdites dents radiales (101)située à l'entrée dudit fluide dans lesdites galeries de circulation, comporte une ogive au centre, de préférence ladite ogive (80) est de forme elliptique d'ordre au moins trois.

10. Machine électrique selon la revendication 9 pour laquelle ladite ogive (80) comporte des ouvertures (81) permettant un passage dudit fluide.

11. Machine électrique selon la revendication 10, pour laquelle lesdites ouvertures (81) de ladite ogive (80) guident avantageusement le flux d'air dans l'entrefer.

12. Machine électrique selon l'une des revendications 10 ou 11, pour laquelle la taille des ouvertures (81) étant inférieure à l'épaisseur de l'entrefer.

13. Machine électrique selon l'une des revendications précédentes, pour laquelle ladite deuxième partie dudit appendice aérodynamique (85, 90), lorsque ledit appendice aérodynamique (85, 90) est positionné à l'extrémité longitudinale desdites dents radiales (101) située à la sortie dudit fluide desdites galeries de circulation, est un profil dont l'épaisseur, dans une section perpendiculaire à la direction radiale desdites dents radiales (101), diminue longitudinalement, l'épaisseur la plus grande étant située au niveau de l'extrémité longitudinale desdites dents radiales (101).

14. Machine électrique selon l'une des revendications précédentes pour laquelle ledit appendice aérodynamique (85, 90) positionné à l'extrémité longitudinale desdites dents radiales (101), située à la sortie dudit fluide desdites galeries de circulation, comporte une dimension longitudinale variable en fonction de sa position radiale, de préférence, la dimension longitudinale diminuant lorsque la position radiale augmente.

15. Machine électrique selon l'une des revendications précédentes pour laquelle ledit appendice aérodynamique (85, 90) positionné à l'extrémité longitudinale desdites dents radiales (101), située en sortie dudit fluide desdites galeries de circulation, est équipé de volets aérodynamiques mobiles et d'un système de commande associé, lesdits volets aérodynamiques mobiles fluide en sortie de ladite machine électrique.

16. Dispositif de compression (10) d'un fluide gazeux ou liquide comprenant un moyen de compression (11) avec une admission (14) dudit fluide à comprimer, une sortie (16) dudit fluide comprimé, ledit moyen de compression (11) dudit fluide étant porté par un arbre de compresseur et logé entre ladite admission (14) et ladite sortie (16), et une machine électrique (24) selon l'une des revendications précédentes, ladite machine électrique (24) étant positionnée en amont, selon le sens du flux de fluide, dudit moyen de compression (11).

17. Dispositif de turbocompresseur électrifié (46) comprenant un moyen de détente (44) et un dispositif de compression (10), selon la revendication 16, ledit moyen de détente (44) et ledit dispositif de compression (10) étant fixés sur un même arbre (20) de rotation, permettant une mise en rotation commune dudit moyen de détente (44) et dudit dispositif de compression (10).

## Patentansprüche

1. Elektrische Maschine (24), beinhaltend einen Rotor (22) und einen Stator (24), der eine Vielzahl von radialen Durchgängen (102) umfasst, die in Umfangsrichtung um den Stator (24) angeordnet sind, wobei die radialen Durchgänge (102) durch radiale Zähne (101) begrenzt werden, wobei in den radialen Durchgängen (102) Magnetflussgeneratoren angeordnet sind, wobei die radialen Durchgänge (102) Fluidzirkulationsgänge neben den Magnetflussgeneratoren umfassen, wobei die elektrische Maschine (24) mindestens ein aerodynamisches Zubehörteil (85, 90) umfasst, wobei das aerodynamische Zubehörteil (85, 90) zu der elektrischen Maschine (24) koaxial ist und an einem Längsende der elektrischen Maschine (24) angeordnet ist, wobei das aerodynamische Zubehörteil (85, 90) mindestens einen ersten Teil zur Führung von Fluid, das durch die Zirkulationsgänge hindurchgeht, und mindestens einen zweiten Teil beinhaltet, wobei sich der zweite Teil radial entlang mindestens einem der radialen Zähne (101) erstreckt und in der axialen Richtung der elektrischen Maschine (24) ein aerodynamisches Profil (87, 91, 92) zum Führen des Fluids aufweist, **dadurch gekennzeichnet, dass** das aerodynamische Zubehörteil (85, 90) zusätzlich zu dem aerodynamischen Profil (87, 91, 92) eine zylindrische Wand (86, 93) zum Führen des Flusses innerhalb dieser Wand (86, 93) beinhaltet.

2. Elektrische Maschine nach Anspruch 1, wobei das aerodynamische Zubehörteil (85, 90) aus einem Material mit geringem Wärmewiderstand, vorzugsweise einem Polymermaterial, hergestellt ist.

3. Elektrische Maschine nach einem der vorhergehenden Ansprüche, wobei das Fluid Luft ist.

4. Elektrische Maschine nach einem der vorhergehenden Ansprüche, wobei das aerodynamische Zubehörteil (85, 90) in Bezug auf die Mittelebene des aerodynamischen Zubehörteils (85, 90) ein asymmetrisches Profil aufweist.

5. Elektrische Maschine nach einem der vorhergehenden Ansprüche, wobei das aerodynamische Zubehörteil (85, 90) durch additive Fertigung oder durch Formguss hergestellt ist.

6. Elektrische Maschine nach einem der vorhergehenden Ansprüche, wobei das aerodynamische Zubehörteil (85, 90) aus mindestens zwei Elementen hergestellt ist, wobei mindestens ein Element abnehmbar ist.

7. Elektrische Maschine nach einem der vorhergehenden Ansprüche, die zwei aerodynamische Zubehörteile (85, 90) beinhaltet, die sich an den zwei Längsenden der elektrischen Maschine (24) befinden.

8. Elektrische Maschine nach einem der vorhergehenden Ansprüche, wobei der zweite Teil des aerodynamischen Zubehörteils (85, 90), wenn das aerodynamische Zubehörteil (85, 90) an dem Längsende der radialen Zähne (101), das sich an dem Eingang des Fluids in die Zirkulationsgänge befindet, positioniert ist, in einem Querschnitt, der sich orthogonal zu der radialen Richtung der radialen Zähne (101) befindet, im Wesentlichen ein halbkreisförmiges Profil aufweist.

9. Elektrische Maschine nach einem der vorhergehenden Ansprüche, wobei das aerodynamische Zubehörteil (85, 90), das an dem Längsende der radialen Zähne (101), das sich an dem Eingang des Fluids in die Zirkulationsgänge befindet, positioniert ist, eine Ogive in der Mitte umfasst, wobei die Ogive (80) vorzugsweise eine elliptische Form mindestens dritter Ordnung aufweist.

10. Elektrische Maschine nach Anspruch 9, wobei die Ogive (80) Öffnungen (81) umfasst, die einen Durchgang des Fluids gestatten.

11. Elektrische Maschine nach Anspruch 10, wobei die Öffnungen (81) der Ogive (80) den Luftstrom vorteilhafterweise in den Luftspalt führen.

12. Elektrische Maschine nach einem der Ansprüche 10 oder 11, wobei die Größe der Öffnungen (81) kleiner als die Dicke des Luftspalts ist.

13. Elektrische Maschine nach einem der vorhergehenden Ansprüche, wobei der zweite Teil des aerodynamischen Zubehörteils (85, 90), wenn das aerodynamische Zubehörteil (85, 90) an dem Längsende der radialen Zähne (101), das sich an dem Ausgang des Fluids aus den Zirkulationsgängen befindet, positioniert ist, ein Profil ist, dessen Dicke in einem zu der radialen Richtung der radialen Zähne (101) senkrechten Querschnitt in Längsrichtung abnimmt, wobei sich die größte Dicke im Bereich des Längsendes der radialen Zähne (101) befindet.

14. Elektrische Maschine nach einem der vorhergehenden Ansprüche, wobei das aerodynamische Zubehörteil (85, 90), das an dem Längsende der radialen Zähne (101), das sich an dem Ausgang des Fluids aus den Zirkulationsgängen befindet, positioniert ist, ein Längsmaß umfasst, das in Abhängigkeit von seiner radialen Position variiert, wobei das Längsmaß vorzugsweise mit zunehmender radialer Position abnimmt.

15. Elektrische Maschine nach einem der vorhergehenden Ansprüche, wobei das aerodynamische Zubehörteil (85, 90), das an dem Längsende der radialen Zähne (101), das sich an dem Ausgang des Fluids aus den Zirkulationsgängen befindet, positioniert ist, über bewegliche aerodynamische Klappen und ein assoziiertes Steuersystem verfügt, wobei die beweglichen aerodynamischen Klappen Fluid an dem Ausgang der elektrischen Maschine.

16. Vorrichtung zum Komprimieren (10) eines gasförmigen oder flüssigen Fluids, beinhaltend ein Kompressionsmittel (11) mit einem Einlass (14) für das zu komprimierende Fluid, einem Auslass (16) für das komprimierte Fluid, wobei das Kompressionsmittel (11) für das Fluid von einer Kompressorwelle getragen wird und sich zwischen dem Einlass (14) und dem Auslass (16) befindet, und eine elektrische Maschine (24) nach einem der vorhergehenden Ansprüche, wobei die elektrische Maschine (24) gemäß der Richtung des Fluidflusses stromaufwärts des Kompressionsmittels (11) positioniert ist.

17. Vorrichtung eines elektrischen Turboladers (46), beinhaltend ein Entspannungsmittel (44) und eine Kompressionsvorrichtung (10) nach Anspruch 16, wobei das Entspannungsmittel (44) und die Kompressionsvorrichtung (10) auf einer gleichen Drehwelle (20) befestigt sind, die es gestattet, das Entspannungsmittel (44) und die Kompressionsvorrichtung (10) gemeinsam in Drehung zu versetzen.

## Claims

1. Electric machine (24) comprising a rotor (22) and a stator (24) having a multiplicity of radial passages (102) disposed circumferentially along said stator (24), said radial passages (102) being delimited by radial teeth (101), magnetic flux generators housed in said radial passages (102), said radial passages (102) having fluid circulation galleries facing said magnetic flux generators, the electric machine (24) having at least one aerodynamic appendage (85, 90), said aerodynamic appendage (85, 90) being coaxial with said electric machine (24), and arranged at one longitudinal end of said electric machine (24), said aerodynamic appendage (85, 90) comprising at least one first part for guiding fluid passing through said circulation galleries and at least one second part, said second part extending radially along at least one of said radial teeth (101) and having, in the axial direction of said electric machine (24), an aerodynamic profile (87, 91, 92) for guiding the fluid, **characterized in that** said aerodynamic appendage (85, 90) comprises, in addition to the aerodynamic profile (87, 91, 92), a cylindrical wall (86, 93) for guiding the flow inside this wall (86, 93).

2. Electric machine according to Claim 1, wherein said aerodynamic appendage (85, 90) is manufactured from a material with low thermal resistance, preferably a polymer material.

3. Electric machine according to either of the preceding claims, for which the fluid is air.

4. Electric machine according to one of the preceding claims, for which said aerodynamic appendage (85, 90) has a profile that is asymmetric along the median plane of said aerodynamic appendage (85, 90).

5. Electric machine according to one of the preceding claims, for which said aerodynamic appendage (85, 90) is produced by additive manufacturing or by moulding.

6. Electric machine according to one of the preceding claims, for which said aerodynamic appendage (85, 90) is made of at least two elements, with at least one removable element.

7. Electric machine according to one of the preceding claims, comprising two aerodynamic appendages (85, 90) situated at the two longitudinal ends of said electric machine (24).

8. Electric machine according to one of the preceding claims, for which said second part of said aerodynamic appendage (85, 90), when said aerodynamic appendage (85, 90) is positioned at the longitudinal end of said radial teeth (101) that is situated at the inlet of said fluid into said circulation galleries, has substantially a semicircular profile in a section orthogonal to the radial direction of said radial teeth (101).

9. Electric machine according to one of the preceding claims, for which said aerodynamic appendage (85, 90), positioned at the longitudinal end of said radial teeth (101) that is situated at the inlet of said fluid into said circulation galleries, has an ogive at the centre, preferably said ogive (80) is of elliptical shape of order at least three.

10. Electric machine according to Claim 9, for which said ogive (80) has openings (81) allowing passage of said fluid.

11. Electric machine according to Claim 10, for which said openings (81) of said ogive (80) advantageously guide the air flow in the air gap.

12. Electric machine according to either of Claims 10 and 11, for which the size of the openings (81) is smaller than the thickness of the air gap.

13. Electric machine according to one of the preceding claims, for which said second part of said aerodynamic appendage (85, 90), when said aerodynamic appendage (85, 90) is positioned at the longitudinal end of said radial teeth (101) that is situated at the outlet of said fluid from said circulation galleries, is a profile of which the thickness, in a section perpendicular to the radial direction of said radial teeth (101), decreases longitudinally, the greatest thickness being situated at the longitudinal end of said radial teeth (101).

14. Electric machine according to one of the preceding claims, for which said aerodynamic appendage (85, 90) positioned at the longitudinal end of said radial teeth (101) that is situated at the outlet of said fluid from said circulation galleries has a longitudinal dimension that is variable as a function of its radial position, the longitudinal dimension preferably decreasing when the radial position increases.

15. Electric machine according to one of the preceding claims, for which said aerodynamic appendage (85, 90) positioned at the longitudinal end of said radial teeth (101) that is situated at the outlet of said fluid from said circulation galleries is equipped with mobile aerodynamic flaps and an associated control system, said mobile aerodynamic flaps fluid at the outlet of said electric machine.

16. Device (10) for compressing a liquid or gaseous fluid, comprising a compression means (11) with an intake (14) for said fluid to be compressed, an outlet (16) for said compressed fluid, said means (11) for compressing said fluid being borne by a compressor shaft and housed between said intake (14) and said outlet (16), and an electric machine (24) according to one of the preceding claims, said electric machine (24) being positioned upstream, in the direction of the fluid flow, of said compression means (11).

17. Electrified turbocompressor device (46), comprising an expansion means (44) and a compression device (10) according to Claim 16, said expansion means (44) and said compression device (10) being fastened to one and the same rotation shaft (20), allowing common rotation of said expansion means (44) and said compression device (10) .
